# EUROPEAN PATENT APPLICATION

(11) **EP 4 589 739 A1**
(43) Date of publication of application: **23.07.2025**
(21) Application number: 24195724.0
(22) Date of filing: 21.08.2024
(51) Int. Cl.: H01M 50/15, H01M 50/164, H01M 50/166, H01M 50/171, H01M 50/184, H01M 50/186, H01M 50/188, H01M 50/193, H01M 50/197, H01M 50/553, H01M 50/557, H01M 50/562, H01M 50/564, H01M 50/548

(54) **CAP ASSEMBLY, SECONDARY BATTERY INCLUDING A CAP ASSEMBLY, AND METHOD OF MANUFACTURING A CAP ASSEMBLY**

(30) Priority: 18.01.2024 KR 20240008368
(71) Applicant: SAMSUNG SDI CO., LTD., Giheung-gu Yongin-si, Gyeonggi-do 17084 (KR)
(72) Inventor: LEE, Hyun Soo, 1Yongin-si, Gyeonggi-do 17084 (KR)
(74) Representative: Marks & Clerk LLP

(57) **Abstract**

Disclosed are a cap assembly, a secondary battery including the cap assembly, and a method of manufacturing the cap assembly. The disclosed cap assembly and secondary battery can be made by the disclosed methods that reduce process difficulty and the process time, and provide improved cap assembly reliability. The cap assembly includes a lower conductive plate, an upper conductive plate disposed above the lower conductive plate, a lower resin layer fused to a bottom surface of the lower conductive plate, and an upper resin layer fused to a top surface of the lower conductive plate, a bottom surface of the upper conductive plate, or the top surface of the lower conductive plate and the bottom surface of the upper conductive plate.

## Description

### BACKGROUND

### Field

Aspects of embodiments of the disclosure relate to a cap assembly, a secondary battery including the same, and a method of manufacturing the same and, for example, to a cap assembly integrally manufactured by molding, a secondary battery including the cap assembly, and a method of manufacturing the cap assembly.

### Description of the Related Art

In a secondary battery, a cap assembly having electrode terminals is fused to an open area of a battery can to seal the open area, and an electrode assembly disposed inside the battery is connected to the outside through electrode terminal ends provided on the cap assembly.

In some cap assemblies, a bottom insulating film is disposed on the bottom surface of a flat cap plate (or sheet), a conductor and a terminal plate are stacked on the cap plate, and a gasket surrounds an electrode terminal open area through which an electrode terminal end extends.

In this case, components, such as the cap plate, the conductor, the terminal plate, the bottom insulating film, and the gasket, are manufactured separately and then are fitted together at predetermined positions with respect to the cap plate and fixed by riveting, thereby forming a cap assembly.

However, a cap assembly manufacturing process based on assembling and riveting is complex and sophisticated, and can result in excessive time consumption in the assembling process and physical damage to the components during the riveting process.

Accordingly, a cap assembly in which components each having a complex shape may be reliably fitted together in a short time without an assembling process is desired.

### SUMMARY

Embodiments of the disclosure provide a cap assembly of which components are integrally combined with one another and directly combined to a battery can in a single process.

Other embodiments of the disclosure provide a secondary battery including the cap assembly.

Other embodiments of the disclosure provide a method of manufacturing the cap assembly.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

To solve the above technical problem, a cap assembly according to some embodiments of the disclosure comprises a lower conductive plate, an upper conductive plate disposed above the lower conductive plate, a lower resin layer fused to a bottom surface of the lower conductive plate, and an upper resin layer fused to a top surface of the lower conductive plate, a bottom surface of the upper conductive plate, or the top surface of the lower conductive plate and the bottom surface of the upper conductive plate.

According to some embodiments, the upper resin layer may comprise a conductor, and the upper conductive plate may be provided as a positive electrode terminal.

According to some embodiments, the conductor may comprise a conductive resin.

According to some embodiments, the upper resin layer may comprise an electrical insulator having a resin, and the upper conductive plate may be a negative electrode terminal.

According to some embodiments, the electrical insulator may comprise an epoxy resin, an acrylic resin, or a silicone resin.

According to some embodiments, the cap assembly may further comprise a gasket configured to cover at least a portion of an inner surface of an electrode hole that extends through the lower resin layer, the lower conductive plate, the upper resin layer, and the upper conductive plate.

To solve the above technical problem, a secondary battery according to some embodiments of the disclosure comprises an electrode assembly configured to comprise a positive electrode plate, a negative electrode plate, and a separator film, a battery can comprising a receiving space in which the electrode assembly is received, with at least one end of the battery can being open, and at least one electrode terminal configured to close the open end of the battery can to seal the receiving space, the at least one electrode terminal being electrically connected to the electrode assembly, wherein the electrode terminal comprises a cap assembly having a pair of conductive plates and a pair of resin layers alternating with the pair of conductive plates.

According to some embodiments, the cap assembly may comprise a lower conductive plate, an upper conductive plate disposed above the lower conductive plate, a lower resin layer fused to a bottom surface of the lower conductive plate, and an upper resin layer fused to a top surface of the lower conductive plate, a bottom surface of the upper conductive plate, or the top surface of the lower conductive plate and the bottom surface of the upper conductive plate, and the upper resin layer comprising a conductive resin.

According to some embodiments, the cap assembly may comprise a lower conductive plate, an upper conductive plate disposed above the lower conductive plate, a lower resin layer fused to a bottom surface of the lower conductive plate, and an upper resin layer fused to a top surface of the lower conductive plate, a bottom surface of the upper conductive plate, or the top surface of the lower conductive plate and the bottom surface of the upper conductive plate, and the upper resin layer comprising an electrode insulating resin.

To solve the above technical problem, a method of manufacturing a cap assembly according to some embodiments of the disclosure includes inserting a lower conductive plate, an upper conductive plate, and a gasket into a mold placed on a stage, moving the mold to a first injection area, forming an upper resin layer by injecting a first resin composition between the lower conductive plate and the upper conductive plate while maintaining the mold at a first temperature, moving the mold to a second injection area, forming a lower resin layer by injecting a second resin composition below the lower conductive plate while maintaining the mold at a second temperature, and obtaining the lower conductive plate, the upper conductive plate, the lower resin layer, and the upper resin layer fused together by disassembling the mold.

According to some embodiments, the injecting of the first resin composition may comprise injecting a molten polyphenylene sulfide (PPS) from an upper portion of the mold by pin gate injection.

According to some embodiments, the injecting of the first resin composition may comprise injecting a molten material selected from an epoxy resin, an acrylic resin, and a silicone resin from above the mold by pin gate injection.

According to some embodiments, the injecting of the second resin composition may comprise injecting a molten polypropylene (PP) downwards from a side portion of the mold by tunnel gate injection.

According to some embodiments, the first temperature may range from 120 °C to 140 °C, and the second temperature may range from 40 °C to 80 °C.

According to some embodiments, the moving of the mold to the first injection area and the moving of the mold to the second injection area may each be performed by rotation of the stage to which the mold is fixed.

At least some of the above and other features of the invention are set out in the claims.

According to some embodiments of the cap assembly, the secondary battery including the same, and the method of manufacturing the same, the cap assembly in which the lower and upper conductive plate, the lower and upper resin layers, and the gasket are integrally formed into a single structure may be manufactured by inserting the conductive plate into mold M and then molding the upper resin layer and the lower resin layer in a high-temperature and high-pressure state.

Compared to the other processes of aligning and riveting the lower and upper conductive plates, the lower and upper resin layers, and the gasket, the process difficulty and the process time may be reduced. In particular, even when where the lower and upper conductive plates, the lower and upper resin layers, and the gasket have a complex shape, the cap assembly may be manufactured in a short time. In addition, the product reliability may be improved and increased compared to the stacked cap assembly in which a pair of conductive plates and a pair of resin layers are individually aligned and then fitted together by the riveting process.

In particular, the efficiency of the fastening of a secondary battery may be improved by fastening the integral stacked cap assembly to the electrode module having a positive subplate and a negative subplate by direct connection terminals.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an exploded perspective view showing a cap assembly according to some embodiments of the disclosure.
FIG. 2 illustrates an exploded perspective view showing a cap assembly according to another embodiment of the disclosure.
FIG. 3 illustrates a perspective view showing a secondary battery including the cap assembly shown in FIG. 1 or 2 according to embodiments of the disclosure.
FIG. 4 illustrates a cross-sectional view of the secondary battery shown in FIG. 3, taken along line a-a'.
FIG. 5 illustrates a perspective view specifically showing the electrode assembly shown in FIG. 4.
FIG. 6 illustrates a perspective view showing a secondary battery including the cap assembly shown in FIG. 1 or 2 according to another embodiment.
FIG. 7 illustrates a perspective view showing an electrode assembly of the secondary battery shown in FIG. 6.
FIG. 8 illustrates a view showing the configuration of a molding apparatus for manufacturing the cap assembly shown in FIG. 1.
FIG. 9 illustrates a flowchart showing a method of manufacturing the cap assembly shown in FIG. 1 using the molding apparatus shown in FIG. 8.
FIG. 10 illustrates the configuration of a mold configured to perform the insertion process shown in FIG. 9.
FIG. 11 illustrates the configuration of a mold in which a pin point gate through which a first resin composition is injected to form an upper resin layer.
FIG. 12 illustrates the configuration of a tunnel gate through which a second resin composition is injected to form a lower resin layer.

### DETAILED DESCRIPTION OF THE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

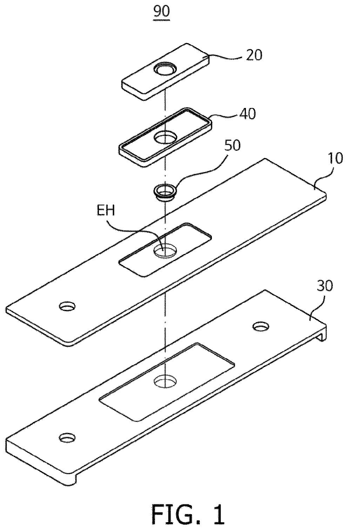

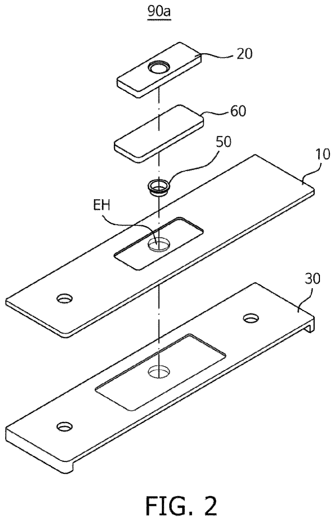

FIG. 1 illustrates an exploded perspective view showing a cap assembly according to an embodiment of the present disclosure, and FIG. 2 illustrates an exploded perspective view showing a cap assembly according to another embodiment of the present disclosure.

Referring to FIGS. 1 and 2, a cap assembly 90 according to some embodiments of the disclosure may be provided as a single structure in which a pair of conductive plates (or sheets) 10 and 20 and a pair of resin layers 30 and 40 alternating with the plates 10 and 20 are bonded together and integrated by fusion.

For example, the cap assembly 90 may include a lower conductive plate 10, an upper conductive plate 20 positioned above the lower conductive plate 10, a lower resin layer 30 fused to the bottom surface of the lower conductive plate 10 to be integrated with the lower conductive plate 10, and an upper resin layer 40 fused to and integrated with at least one of the top surface of the lower conductive plate 10 and the bottom surface of the upper conductive plate 20.

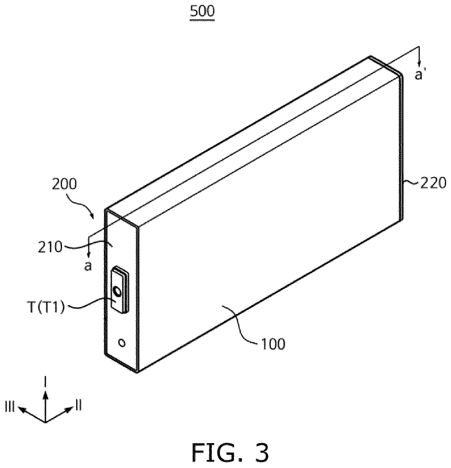

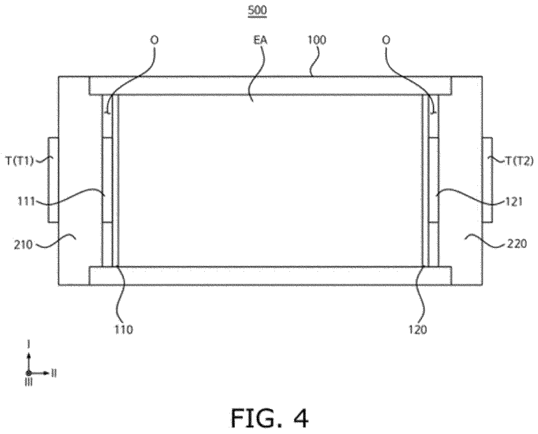

In some embodiments, the lower conductive plate 10 may be coupled to a battery can 100 (see FIG. 3) to be provided as a cap plate providing an electrode terminal connected to an electrode assembly EA (see FIG. 4) provided in the battery can 100.

Accordingly, the lower conductive plate 10 may be of a size and shape capable of covering the open area of the corresponding battery can 100, and may be coupled to the battery can 100 to sufficiently seal the internal receiving space of the battery can 100. For example, the lower conductive plate 10 may be coupled to the battery can 100 by welding.

In some embodiments, the lower conductive plate 10 may be made of the same metal material as the battery can 100. For example, the lower conductive plate 10 may be made of aluminium (Al) or an alloy thereof.

The upper conductive plate 20 may be disposed above the lower conductive plate 10 to serve as an electrode terminal end connecting the electrode assembly to an external power source. Thus, the upper conductive plate 20 may be provided as a terminal plate of a cap assembly for a secondary battery.

The upper conductive plate 20 may be made of a conductive material having sufficient strength and rigidity to reliably support and be coupled to the electrode terminal in contact therewith. In some embodiments, the upper conductive plate 20 may be made of the same material as the lower conductive plate 10. In some embodiments, the upper conductive plate 20 may be made of any conductive material capable of serving as a terminal plate.

The upper conductive plate 20 may have a smaller size than the lower conductive plate 10 and a shape protruding from the lower conductive plate 10. In the secondary battery 500, the upper conductive plate 20 may serve as a contact point in contact with an electrode terminal.

The lower resin layer 30 may be fused to the bottom surface of the lower conductive plate 10 to be integrated with the lower conductive plate 10 and electrically separate a collector plate 101 (see FIG. 4) of the electrode assembly EA and the lower conductive plate 10.

In some embodiments, the lower resin layer 30 may be provided as a bottom surface insulating layer disposed on the bottom surface of the cap plate to electrically separate the cap assembly 90 and the electrode assembly EA. For example, the lower resin layer 30 may be made of an insulating material to be injected in a molten state into a mold, as described later.

Recesses such as a textured structure may be provided on the bottom surface of the lower conductive plate 10 by surface processing so as to be filled with a molten resin in a subsequent molding process. As a result, the lower resin layer 30 may be disposed integrally on the bottom surface of the lower conductive plate 10 by the molding process.

For example, the lower resin layer 30 may be made of a variety of insulating resins. As more specific examples, the lower resin layer 30 may be made of a resin selected from an epoxy resin, an acrylic resin, and a silicone resin. For example, the lower resin layer 30 may be made of polypropylene.

The upper resin layer 40 may be disposed between the lower conductive plate 10 and the upper conductive plate 20 to be fused to and integrated with at least one of the top surface of the lower conductive plate 10 and the bottom surface of the upper conductive plate 20.

Like the bottom surface of the lower conductive plate 10, the top surface of the lower conductive plate 10 and/or the bottom surface of the upper conductive plate 20 may be formed with fine recesses by surface processing and then buried with a molten resin in the following molding process. As a result, the upper resin layer 40 may be provided integrally on the top surface of the lower conductive plate 10 and/or the bottom surface of the upper conductive plate 20 by the molding process.

For example, the upper resin layer 40 may be disposed below the terminal plate connected to a contact terminal to serve as a conductor to prevent an overload from being applied to the electrode assembly EA or as an insulating layer to block current transfer to the electrode assembly EA.

When a current is applied to the upper conductive plate 20 serving as a terminal plate, the high resistance of the upper resin layer 40 may block a current exceeding the allowance of the electrode assembly EA from being applied to the electrode assembly EA, thereby protecting the electrode assembly EA. Accordingly, the upper resin layer 40 is set to have an electrical resistance sufficient to control the overloading of the electrode assembly EA.

In some embodiments, the upper resin layer 40 may be made of a conductive resin. For example, the upper resin layer 40 may be made of polyphenylene sulfide (PPS).

Accordingly, when the upper resin layer 40 is made of a connective material as shown in FIG. 1, the upper conductive plate 20 may serve as a positive electrode terminal plate, and the cap assembly 90 may serve as a positive terminal including a positive electrode terminal.

In another example, as shown in FIG. 2, an upper resin layer 60 may be made of an electrical insulating material. That is, the upper conductive plate 20 and the lower conductive plate 10 may be electrically separated by the upper resin layer 60 made of an insulating resin. In this case, the upper conductive plate 20 may serve as a negative electrode terminal plate, and a cap assembly 90a may serve as a negative terminal including a negative electrode terminal.

The upper resin layer 60 serving as an electrical insulator may be made of substantially the same material as the lower resin layer 30. For example, the upper resin layer 60 serving as an electrical insulator may be made of polypropylene (PP).

An electrode hole EH may be provided to extend through the lower resin layer 30, the lower conductive plate 10, the upper resin layer 40, and the upper conductive plate 20. The electrode hole EH may be used to form an electrode terminal end T (see FIG. 3).

The electrode hole EH may be formed to extend through the central portions of the lower resin layer 30, the lower conductive plate 10, the upper resin layer 40, and the upper conductive plate 20. The electrode terminal end T may extend through the electrode hole EH to be in contact with the collector plate 101 of the electrode assembly EA positioned there below. A gasket 50 may be disposed within the electrode hole EH to electrically insulate the lower and upper conductive plates 10 and 20. The gasket 50 may cover at least a portion of the inner surface of the electrode hole EH extending through the lower resin layer 30, the lower conductive plate 10, the upper resin layer 40, and the upper conductive plate 20.

For example, the gasket 50 may be made of a fluororesin having plastic properties that are stable over a wide temperature range. As a more specific example, the gasket 50 may be made of perfluoroalkoxy (PFA).

According to the cap assemblies 90 and 90a as described above, a pair of conductive plates 10 and 20 and a pair of resin layers 30 and 40 are arranged to alternate with each other, and a molten resin is fused by the recesses provided on the surfaces of the conductive plates 10 and 20, so that the pair of conductive plates 10 and 20 and the pair of resin layers 30 and 40 form an integrated single structure.

Accordingly, the reliability of a product may be improved compared to a stacked cap assembly in which a pair of conductive plates and a pair of resin layers are individually aligned and then fitted together by riveting. In particular, the polarity of the cap assembly may be controlled simply by changing the composition of the upper resin layer positioned between the pair of conductive plates.

Accordingly, the efficiency of battery manufacturing may be improved by manufacturing cap assembly modules having different polarities and immediately coupling the cap assembly modules to the battery can.

Each of the cap assemblies 90 and 90a as described above may be provided as an electrode terminal in contact with an electrode assembly having a variety of structures.

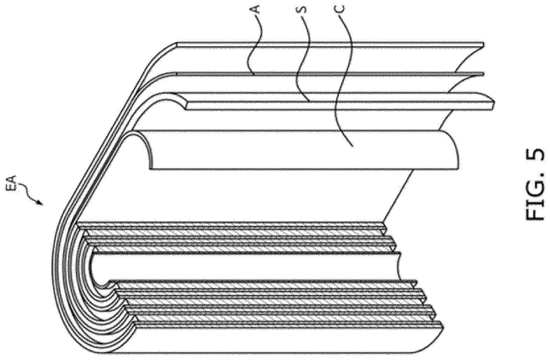

FIG. 3 illustrates a perspective view showing a secondary battery including the cap assembly shown in FIG. 1 or 2 according to embodiments of the present disclosure, FIG. 4 illustrates a cross-sectional view of the secondary battery shown in FIG. 3, taken along line a-a', and FIG. 5 illustrates a perspective view specifically showing the electrode assembly shown in FIG. 4.

Referring to FIGS. 3 to 5, the secondary battery 500 according to embodiments of the disclosure may include a battery can 100 having a receiving space O therein, an electrode assembly EA received in the receiving space O, and electrode terminals 200 covering ends of the battery can 100 to close the receiving space O.

In some embodiments, the battery can 100 may be an angled cylinder with ends thereof being open to have open areas. The angled cylinder may have a can width in a first direction I and a can length in a second direction II.

For example, the battery can 100 may be provided as a three-dimensional structure formed by a single forging process to have a receiving space therein, wherein the electrode assembly EA and an electrolyte may be received in the receiving space.

The receiving space is sealed by the electrode terminals 200 welded to the ends of the battery can 100 so as to be sealed from the outside. Accordingly, the battery can 100 and the base plates of the electrode terminals 200 may be made of the same material to improve the welding quality so that the receiving space may be sufficiently sealed. For example, the battery can 100 may be made of aluminium (Al) or an alloy thereof having excellent electrical conductivity and ductility.

In some embodiments, the electrode assembly EA may be provided as a wound structure in which a positive electrode plate A, a negative electrode plate C, and an insulating separator film S provided between the positive electrode plate A and the negative electrode structure C are wound. Additionally, and/or alternatively, a stacked structure may be provided with the insulating separator film S provided between the positive electrode plate A and the negative electrode plate C.

Each of the positive electrode plate A and the negative electrode plate C may include a coated portion, i.e., an area of a base formed of a metal foil coated with an active material, and an uncoated portion, i.e., an area of the base not coated with the active material. The positive electrode plate A of the electrode assembly EA is connected to a positive electrode lead plate 110 through the positive electrode uncoated portion, and the negative electrode plate C is connected to a negative electrode lead plate 120 through the negative electrode uncoated portion.

The positive electrode lead plate 110 includes a positive electrode contact plate 111, to which a positive electrode terminal end T1 described later is electrically connected. In addition, the negative electrode lead plate 120 includes a negative electrode contact plate 121, to which a negative electrode terminal end T2 described later is electrically connected.

The electrode assembly EA may be inserted in the receiving space of the battery can 100 to form a chemical battery together with the electrolyte. After the electrode terminals 200 and the battery can 100 are sealed by welding, the electrolyte is injected into the receiving space in which the electrode assembly EA is disposed through an injection hole. The electrolyte may perform ion exchange between the positive electrode plate and the negative electrode plate, thereby generating a continuous current flow through the positive electrode terminal end T1 and the negative electrode terminal end T2.

In some embodiments, the electrode terminals 200 may be cap assemblies directly coupled to the battery can 100. In some embodiments, the electrode terminals 200 may include a first terminal 210 provided as a positive terminal including the positive electrode terminal end T1 and in contact with the positive electrode contact plate 111 and a second terminal 220 provided as a negative terminal including the negative electrode terminal end T2 and in contact with the negative electrode contact plate 112.

In some embodiments, the first terminal 210 may have substantially the same structure as the cap assembly 90 shown in FIG. 1, and the second terminal 220 may have substantially the same structure as the cap assembly 90a shown in FIG. 2.

For example, the upper resin layer 40 of the first terminal 210 may be made of polyphenylene sulfide (PPS), i.e., a conductive resin, and the upper resin layer 60 of the second terminal 220 may be made of polypropylene (PP), i.e., an electrode insulating resin.

In addition, when the upper resin layer 60 of the second terminal 220 is provided as an insulating layer to insulate the upper conductive plate 20 and the lower conductive plate 10, no electrode hole may be provided. Accordingly, the lower conductive plate 10 causes the negative electrode terminal to serve as a negative electrode.

Each of the first terminal 210 and the second terminal 220 may be a terminal module in which a pair of conductive plates 10 and 20 and a pair of resin layers 30 and 40 are alternately stacked, fused, and integrated together.

By manufacturing the cap assemblies 90 and 90a, in each of which the conductive plates 10 and 20 and the resin layers 30 and 40 are integrally stacked by a molding process described later, in the form of terminal modules, manufacturing and fastening processes for electrode terminals in a secondary battery manufacturing process may be performed in a simple manner. Accordingly, the secondary battery manufacturing process is simplified and efficient.

The electrode terminals 200 can be fastened to the battery can 100 by welding to form the secondary battery 500. The positive electrode terminal end T1 of the first terminal 210 and the negative electrode terminal end T2 of the second terminal 220 may be connected to an external power source or an external load so that the secondary battery is charged or discharged.

In some embodiments, the battery can 100 is a cylinder with opposite ends thereof being open, and the electrode terminals 200 are provided on the opposite ends of the battery can 100. Accordingly, the electrode terminals 200 can be provided as a pair of side terminals. In some additional embodiments, the battery can 100 is configured as a cylinder with one end thereof being open, such that the electrode terminals 200 may be provided as top terminals.

For example, the secondary battery 500 may be a lithium-ion battery. However, the disclosure is not limited thereto, and a variety of battery structures may be used.

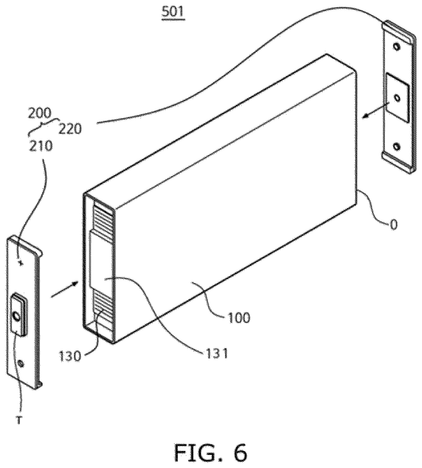

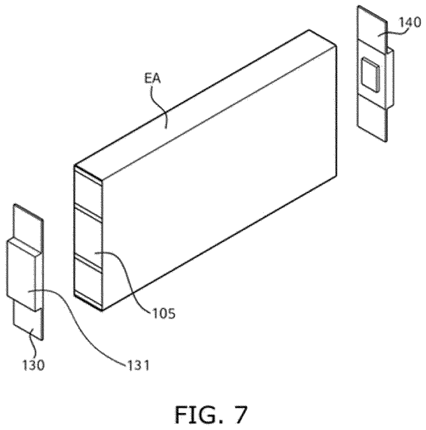

FIG. 6 illustrates a perspective view showing a secondary battery including the cap assembly shown in FIG. 1 or 2 according to another embodiment, and FIG. 7 illustrates a perspective view showing an electrode assembly of the secondary battery shown in FIG. 6.

In some embodiments, series electrode terminals are directly fastened to a subplate. In some additional embodiments, a secondary battery 501 has the cap assemblies 90 or 90a shown in FIG. 1 or 2 as the series electrode terminals.

Referring to FIGS. 6 and 7, the secondary battery 501 according to some additional embodiments has the battery can 100 including the receiving space receiving the electrode assembly EA and the electrode terminals 200 disposed on the ends of the battery can 100 to be electrically connected to the electrode assembly EA.

In some embodiments, the battery can 100 may be an angled cylinder with opposite ends thereof being open. The battery can 100 of FIGS. 6 and 7 has substantially the same configuration as the battery can 100 shown in FIG. 3 and 4, and thus, a further detailed description thereof will be omitted.

In some embodiments, the electrode assembly EA may be provided as a wound structure in which the positive electrode plate A, the negative electrode plate C, and the insulating separator film S provided between the positive electrode plate A and the negative electrode structure C are wound, as shown in FIG. 5. In some additional embodiments, however, the electrode assembly may be of a stacked structure in which the insulating separator film S is provided between the positive electrode plate A and the negative electrode plate C, or may be an angled electrode assembly in which the components are stacked according to the shape of the battery can 100.

In some embodiments, the electrode assembly EA is integrated with a positive electrode collector plate 105 connected to the positive electrode plate A and a negative electrode collector plate (not shown) connected to the negative electrode plate C, and is inserted in the battery can 100. A positive electrode subplate 130 connected to the positive electrode collector plate 105 can be fitted to one end of the battery can 100, and a negative electrode subplate 140 connected to the negative electrode collector plate can be fitted to the other end of the battery can 100. Thus, the positive electrode plate A of the electrode assembly EA can be connected to the positive electrode subplate 130, and the negative electrode plate C is connected to the negative electrode subplate 140.

The electrode terminals 200 includes the first terminal 210 and the second terminal 220 connected to the positive electrode subplate 130 and the negative electrode subplate 140, respectively, at the opposite ends of the battery can 100, thereby forming a positive terminal and a negative terminal. Accordingly, the electrode terminals 200 are provided as side terminals in which the positive terminal and the negative terminal are separated.

Accordingly, the electrode terminal ends T of the electrode terminals 200 are connected to the positive electrode plate A and the negative electrode plate C of the electrode assembly EA through the positive electrode subplate 130 and the negative electrode subplate 140, respectively.

In some embodiments, the first terminal 210 in contact with the positive electrode subplate 130 may be the cap assembly 90 described with reference to FIG. 1, and the second terminal 220 in contact with the negative electrode subplate 140 may be the cap assembly 90a described with reference to FIG. 2.

Accordingly, the electrode assemblies including the positive electrode subplate 130 and the negative electrode subplate 140 may be inserted into the battery can 100 to form electrode modules, the cap assemblies 90 or 90a in each of which the conductive plates 10 and 20 and the resin layers 30 and 40 are integrally stacked may be provided as series terminal modules, and the secondary battery may be manufactured simply by coupling the electrode modules and the series terminal modules. Accordingly, the secondary battery manufacturing process may be simplified, and the efficiency thereof may be improved.

In some embodiments, the secondary battery 501 may be a lithium-ion battery. However, the disclosure is not limited thereto, and may include a variety of battery structures that, e.g., include the series cap assemblies as the electrode terminals 200.

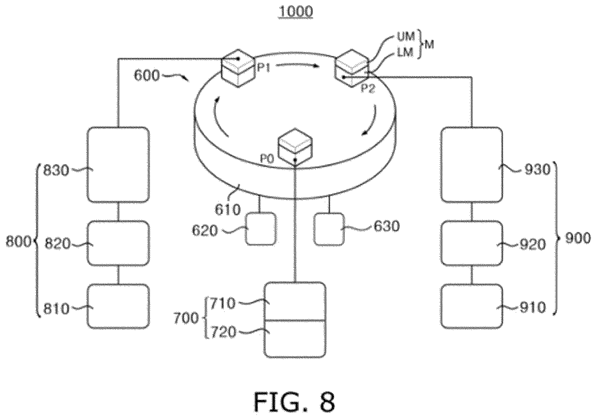

FIG. 8 illustrates a view showing the configuration of a molding apparatus for manufacturing the cap assembly shown in FIG. 1.

Referring to FIG. 8, a molding apparatus 1000 for manufacturing the cap assembly 90 may include a stage module 600 on which a mold M is placed, an inserting module 700 configured to perform an insertion process on the mold M, a first injection module 800 configured to perform a first injection process on the mold M, e.g., after the insertion process is performed, and a second injection module 900 configured to perform a second injection process on the mold M, e.g., after the first injection process is performed.

In some embodiments, the stage module 600 may include a stage 610 configured to fix the mold M, a drive part 620 configured to drive the stage 610, and a power supply 630 configured to heat the stage 610.

The stage 610 may have the shape of a disk having a predetermined thickness to fix the mold M to the top surface thereof. A fixing structure configured to fix the mold M is provided on the top surface of the stage 610, and the mold M is coupled to the fixing structure to be fixed to the stage 610.

The stage 610 may include a shaft member (not shown) disposed on the central portion thereof, and the drive part 620 may rotate the shaft member. For example, the drive part 620 may include an electric driver such as a motor.

In response to the rotation of the stage 610, the mold M may sequentially move to an initial position P0 at which the insertion process is performed, a first injection position P1 at which the first injection process is performed, and a second injection position P2 at which the second injection process is performed.

The power supply 630 may maintain a molding temperature by heating a fixing position at which the mold M is fixed. For example, an electric heater (not shown) configured to heat the mold M may be disposed at the fixing position at which the mold M is fixed, and the power supply 630 may apply power to the electric heater to generate Joule heat. Accordingly, the mold M may be maintained at a constant temperature while the injection molding is being performed by the molding apparatus 1000.

The mold is a component that can have an internal shape corresponding to an object to be molded, and may include an upper mold UM and a lower mold LM. After inserting objects are placed within the lower mold LM having the shape of the object to be molded, the upper mold UM may be fitted to the lower mold LM to block the interior from the outside to form the mold M.

After the upper mold UM and the lower mold LM are preformed to have internal shapes corresponding to the respective components of the cap assembly 90 at positions where the components are to be positioned, the upper mold UM and the lower mold LM may be loaded onto the stage 610 by a loading device such as a robot arm.

In some embodiments, the inserting module 700 may perform the insertion process on the lower mold LM placed at the initial position P0 of the stage 610. In some embodiments, the insertion process is a process performed to insert pre-formed products into the mold M before the injection molding is performed.

Accordingly, the inserting module 700 may include a receiving part 710 configured to receive the pre-formed products and an inserting device 720 configured to insert the pre-formed products into the lower mold LM.

The receiving part 710 may be provided as receiving decks having receiving areas and assigned based on a unique ID of each product.

Based on the unique IDs of the products delivered from the receiving part 710, the inserting device 720 may remove the products from the receiving part and insert the products into the lower mold LM. For example, the inserting device 720 may include a transport arm and a tweezer structure (or a pincette structure) disposed on the distal end of the transport arm to remove corresponding products from the receiving positions of the receiving decks and insert the products into insertion positions of the lower mold LM.

In some embodiments, the pre-formed products manufactured by separate processes may include the lower conductive plate 10, the upper conductive plate 20, and the gasket 50 of the cap assembly 90. Accordingly, the lower conductive plate 10, the upper conductive plate 20, and the gasket 50 may be received in the separate receiving decks of the receiving part 710 and then inserted into the insertion positions of the lower mold LM by the inserting device 720.

In some embodiments, the mold M is not heated at the initial position P0 at which the insertion process takes place.

At the first injection position P1, the first injection module 800 may perform the first injection process on the mold M on which the insertion process is performed.

For example, the first injection module 800 may include a first source supply 810 configured to supply a first injection material, a first melting part 820 configured to plasticize the first injection material to form a first molten molding material, and a first runner 830 configured to inject the first molten molding material into the mold M.

The first source supply 810 may include a tank (not shown) configured to receive the first injection material and a supply line (not shown) connecting the first melting part 820 to the tank. In some embodiments, the first injection material includes a conductive polymer capable of forming the upper resin layer 40 in the injection process.

The first melting part 820 may be a plastic processing device that plasticizes the first injection material into a first molten molding material having flowability. For example, the first injection material may be converted into the first molten molding material having flowability by lowering the glass transition temperature by mixing the conductive polymer with a plasticizer.

The first runner 830 may supply the first molten molding material, produced by the first melting part 820, to a gate of the mold M. When the molten molding material is melted at a high temperature, the first runner 830 may be a hot runner configured to maintain the molten state of the molten molding material.

In some embodiments, the gate disposed inside the mold M is provided as a pin gate inserted from the upper mold UM into an upper resin layer area where the upper resin layer 40 is to be formed, the upper resin layer area being positioned in an area between the lower and upper conductive plates 10 and 20.

The mold M may be maintained at an appropriate injection temperature according to the type of the first molten molding material by the power supply 630. For example, when the first molten molding material is a molten polyphenylene sulfide (PPS), an example of a conductive polymer, the mold M may be maintained in a temperature range of about 120 °C to about 140 °C.

The second injection module 900 may perform the second injection process on the mold M, on which the first injection process is performed, at the second injection position P2 of the stage 610.

For example, the second injection module 900 may include a second source supply 910 configured to supply the second injection material, a second melting part 920 configured to plasticize the second injection material to form the second molten molding material, and a second runner 930 configured to supply the second molten molding material to the mold M.

The second source supply 910 may include a tank (not shown) configured to receive the second injection material and a supply line (not shown) connecting the second melting part 920 to the tank. In some embodiments, the second injection material includes an insulating polymer capable of forming the lower resin layer 30 in response to the injection process.

The second melting part 920 may be a plastic processing device that plasticizes the second injection material into the second molten molding material having flowability. For example, the second injection material may be converted into the second molten molding material having flowability by lowering the glass transition temperature by mixing the insulating polymer with a plasticizer.

The second runner 930 may supply the second molten molding material, produced by the second melting part 920, to the gate of the mold M. When the second molten molding material is melted at a high temperature, the second runner 930 may be a hot runner configured to maintain the molten state of the second molten molding material.

In some embodiments, the gate disposed inside the mold M is a tunnel gate inserted from the upper mold UM into a lower resin layer area where the lower resin layer 30 is to be formed.

The mold M may be maintained at an appropriate injection temperature according to the type of the second molten molding material by the power supply 630. For example, when the second molten molding material is a molten polypropylene (PP), an example of an insulating polymer, the mold M may be maintained in a temperature range of about 40 °C to about 80 °C.

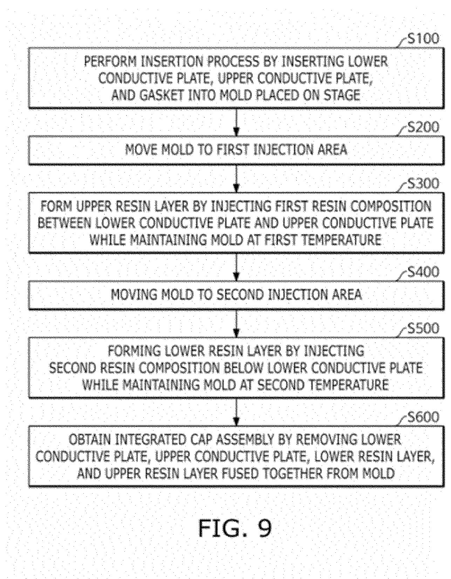

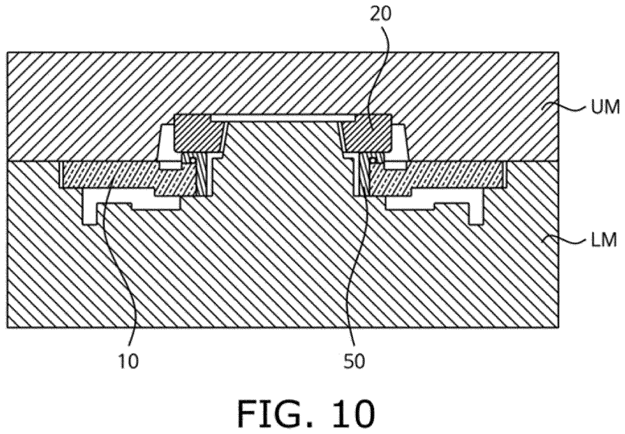

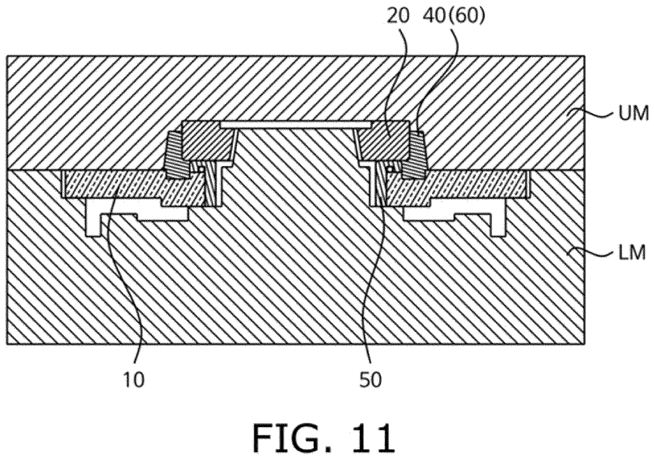

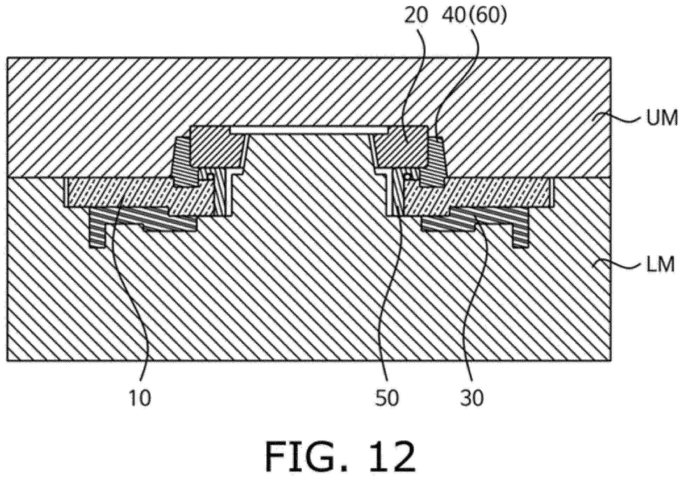

FIG. 9 illustrates a flowchart showing a method of manufacturing the cap assembly shown in FIG. 1 using the molding apparatus shown in FIG. 8. FIG. 10 illustrates the configuration of a mold configured to perform the insertion process shown in FIG. 9. FIG. 11 illustrates the configuration of a mold in which a pin point gate through which a first resin composition is injected to form an upper resin layer. FIG. 12 illustrates the configuration of a tunnel gate through which a second resin composition is injected to form a lower resin layer.

Hereinafter, the method of manufacturing the cap assembly 90 shown in FIG. 1 using the molding apparatus 1000 shown in FIG. 8 is described with reference to FIG. 9.

The cap assembly 90 shown in FIG. 1 may be manufactured by positioning a mold on a rotary stage 610, i.e., a rotatable base plate, and continuously performing an insertion process, a first molding process, and a second molding process.

Accordingly, the cap assembly 90 may be manufactured in a short time regardless of the complexity of the components by reducing the process time as compared to the stacked cap assembly manufactured by the assembling and riveting of the related art.

The cap assembly 90 formed into a single module by continuous two molding processes may be coupled to the battery can 100 having the electrode assembly EA, thereby serving as an electrode terminal. Accordingly, the cap assembly 90 manufactured by the two molding processes may be manufactured as an integral module.

Referring to FIGS. 9 to 12, first, an insertion process can be performed by inserting the lower conductive plate 10, the upper conductive plate 20, and the gasket 50 into the mold M placed on the stage 610 of the molding apparatus 1000 (step S100).

The lower mold LM may be formed to have an internal shape corresponding to the components of the cap assembly 90 in the areas where the components of the cap assembly 90 are to be positioned. The lower mold LM can then be loaded onto the rotary stage 610 by a separate loading device.

Subsequently, the lower conductive plate 10, the upper conductive plate 20, and the gasket 50 manufactured by separate processes may be inserted into the corresponding areas of the lower mold LM by the inserting device 720.

The lower conductive plate 10 and the upper conductive plate 20 may respectively be made of a conductive metal material, and the gasket 50 may be made of an insulating plastic.

The areas where the respective components of the cap assembly 90 are to be positioned can be preformed in the lower mold LM, and the lower conductive plate 10, the upper conductive plate 20, and the gasket 50 can be removed and prepositioned at the corresponding positions.

The upper mold UM can be placed to cover the upper portion of the lower mold LM to form the closed mold M. The lower conductive plate 10, the upper conductive plate 20, and the gasket 50 may then be compressed within the mold M by applying an appropriate pressure to the components of the cap assembly 90.

Upon completion of the insertion process, the stage 610 can be rotated to position the mold M at the first injection position P1 (step S200). The first molten molding material is injected as a first resin composition between the lower conductive plate 10 and the upper conductive plate 20 to form the upper resin layer 40 (step S300).

The stage 610 may rotate while pressing and heating the mold M at a predetermined temperature and pressure. Accordingly, the mold M fixed to the stage 610 may also rotate together with the stage 610 to move to the first injection position P1.

The mold M can then be heated to a temperature of about 120 °C to about 140 °C and moved so that the first resin composition can be injected through the first runner 830. In some embodiments, the first resin composition may be a molten polyphenylene sulfide (PPS), an example of a conductive polymer.

The first resin composition can be supplied into the mold M through the first runner 830. For example, the first runner 830 can be connected to the pin gate inserted from the upper mold UM in the upper resin layer area where the upper resin layer 40 can be formed, the upper resin layer area being positioned in an area between the lower and upper conductive plates 10 and 20. Accordingly, the first resin composition may be injected in a pin shape into the upper resin layer area through the first runner 830, thereby forming the upper resin layer 40 as a conductor made of the conductive resin.

In some additional embodiments, the first resin composition may be a molten insulating composition including at least one selected from an epoxy resin, an acrylic resin, and a silicone resin. Like the conductive resin, the first resin composition of the insulating resin can be guided by the first runner 830 and injected through the pin gate inserted from the upper mold UM into the upper resin layer area where the upper resin layer 60 (see FIG. 2) can be formed, the upper resin layer area being positioned in an area between the conductive plates 10 and 20. As such, the upper resin layer 60 may be formed as an electrical insulator made of the insulating resin. In the pin gate process, both the gate and the first runner 830 may be removed after the injection molding is completed. Accordingly, separate cutting or trimming may not be necessary, thereby allowing the upper resin layer 40 or 60 to be formed in a short time.

Upon completion of the injection of the first resin composition, the stage 610 can be rotated so that the mold M is positioned at the second injection position P2 (step S400), and the second molten molding material can be injected as a second resin composition into the area below the lower conductive plate 10 to form the lower resin layer 30 (step S500).

The stage 610 can adjust the temperature to be appropriate for the second resin injection while maintaining a uniform pressure. As such, the stage 610 may move to the second injection position P2 while being heated to the changed temperature in a state where the uniform pressure is applied. The mold M heated to a temperature of about 40 °C to about 80 °C can then be moved, and the second resin composition can be injected through the second runner 930.

In some embodiments, the second resin composition may be a molten polypropylene (PP), an example of an insulating polymer.

The second resin composition can be supplied to the mold M through the second runner 930. For example, in a side portion of the mold M, the second runner 930 can be connected to the tunnel gate extending through the lower mold LM in an inclined manner. As such, the second resin composition may be injected in a tunnel shape into the lower resin layer area through the second runner 930 to form the lower resin layer 30 as an insulating layer made of an insulating resin.

The second resin composition may include not only the molten polypropylene (PP) but also at least one molten material selected from an epoxy resin, an acrylic resin, and a silicone resin.

The lower and upper resin layers 30 and 40 may be fused to the surfaces of the lower conductive plate 10 and the upper conductive plate 20 within the mold M at a predetermined temperature and pressure. For example, a plurality of recesses can be formed on each of the lower conductive plate 10 and the upper conductive plate 20 by surface processing. Thus, the first and second resin compositions may be integrally coupled to the lower conductive plate 10 and the upper conductive plate 20.

After the lower and upper resin layers 30 and 40 are integrally formed on the lower conductive plate 10 and the upper conductive plate 20 within the mold M, the rotary stage 610 can be rotated to position the mold M at the initial position.

Thereafter, the mold M may be divided into the upper mold UM and the lower mold LM, and a cap assembly 90 molded as a single integrated structure may be removed from the mold M (step S600).

Accordingly, the single cap assembly 90 in which the lower and upper resin layers 30 and 40 are integrally molded on the lower conductive plate 10 and the upper conductive plate 20 by a single process may be obtained.

According to the cap assembly manufacturing method described above, the cap assemblies 90 and 90a, in each of which the lower and upper conductive plates 10 and 20, the lower and upper resin layers 30 and 40, and the gasket 50 are integrally formed into a single structure, may be manufactured by inserting the conductive plate into mold M and then molding the upper resin layer 40 and the lower resin layer 30 in a high-temperature and high-pressure state.

Compared to other processes of aligning and riveting the lower and upper conductive plates 10 and 20, the lower and upper resin layers 30 and 40, and the gasket 50, the process difficulty and the process time of the methods disclosed herein may be reduced. For example, even when the lower and upper conductive plates 10 and 20, the lower and upper resin layers 30 and 40, and the gasket 50 have a complex shape, the cap assemblies 90 and 90a may be manufactured in a short time.

According to the cap assembly, the secondary battery including the same, and the method of manufacturing the same as described above, the cap assembly in which the lower and upper conductive plate, the lower and upper resin layers, and the gasket are integrally formed into a single structure may be manufactured by inserting the conductive plate into mold M and then molding the upper resin layer and the lower resin layer in a high-temperature and high-pressure state.

Compared to other processes of aligning and riveting the lower and upper conductive plates, the lower and upper resin layers, and the gasket, the process difficulty and the process time may be reduced. For example, even when the lower and upper conductive plates, the lower and upper resin layers, and the gasket have a complex shape, the cap assembly may be manufactured in a short time. For example, the product reliability may be improved and increased compared to the stacked cap assembly in which a pair of conductive plates and a pair of resin layers are individually aligned and then fitted together by the riveting process.

For example, the efficiency of the fastening of a secondary battery may be improved by fastening the integral stacked cap assembly to the electrode module having a positive subplate and a negative subplate by direct connection terminals.

The following are some additional nonlimiting embodiments.
1. A cap assembly comprising:
   a lower conductive plate;
   an upper conductive plate disposed above the lower conductive plate;
   a lower resin layer fused to a bottom surface of the lower conductive plate; and
   an upper resin layer fused to a top surface of the lower conductive plate, a bottom surface of the upper conductive plate, or the top surface of the lower conductive plate and the bottom surface of the upper conductive plate.
2. The cap assembly of embodiment 1, wherein each of the lower conductive plate and the upper conductive plate comprises recesses on a surface thereof, the lower conductive plate is fused to the lower resin layer, and the upper conductive plate is fused to the upper resin layer.
3. The cap assembly of embodiment 2, wherein the upper resin layer comprises a conductor, and the upper conductive plate is provided as a positive electrode terminal.
4. The cap assembly of embodiment 3, wherein the conductor comprises a conductive resin.
5. The cap assembly of embodiment 2, wherein the upper resin layer comprises an electrical insulator comprising a resin, and the upper conductive plate is provided as a negative electrode terminal.
6. The cap assembly of embodiment 5, wherein the electrical insulator comprises an epoxy resin, an acrylic resin, or a silicone resin.
7. The cap assembly of any one of embodiments 1 to 6, further comprising a gasket configured to cover at least a portion of an inner surface of an electrode hole that extends through the lower resin layer, the lower conductive plate, the upper resin layer, and the upper conductive plate.
8. A secondary battery comprising:
   an electrode assembly comprising a positive electrode plate, a negative electrode plate, and a separator film;
   a battery can comprising a receiving space in which the electrode assembly is received, with at least one end of the battery can being open; and
   at least one electrode terminal configured to close the open end of the battery can to seal the receiving space, the at least one electrode terminal being electrically connected to the electrode assembly,
   wherein the electrode terminal comprises a cap assembly comprising a pair of conductive plates and a pair of resin layers alternating with the pair of conductive plates.
9. The secondary battery of embodiment 8, wherein the cap assembly comprises:
   a lower conductive plate;
   an upper conductive plate disposed above the lower conductive plate;
   a lower resin layer fused to a bottom surface of the lower conductive plate; and
   an upper resin layer fused to a top surface of the lower conductive plate, a bottom surface of the upper conductive plate, or the top surface of the lower conductive plate and the bottom surface of the upper conductive plate, and the upper resin layer comprising a conductive resin.
10. The secondary battery of embodiment 9, wherein the upper resin layer comprises a conductor, and the upper conductive plate is a positive electrode terminal plate connected to the positive electrode plate.
11. The secondary battery of embodiment 10, wherein the cap assembly further comprises a gasket configured to cover at least a portion of an inner surface of an electrode hole extending through the lower resin layer, the lower conductive plate, the upper resin layer, and the upper conductive plate.
12. The secondary battery of embodiment 8, wherein the cap assembly comprises:
   a lower conductive plate;
   an upper conductive plate disposed above the lower conductive plate;
   a lower resin layer fused to a bottom surface of the lower conductive plate; and
   an upper resin layer fused to a top surface of the lower conductive plate, a bottom surface of the upper conductive plate, or the top surface of the lower conductive plate and the bottom surface of the upper conductive plate, the upper resin layer comprising an electrode insulating resin.
13. The secondary battery of embodiment 12, wherein the upper resin layer comprises an electrical insulator, and the upper conductive plate is a negative electrode terminal plate.
14. The secondary battery of embodiment 13, wherein the cap assembly further comprises a gasket covering at least a portion of an inner surface of that electrode hole extends through the lower resin layer, the lower conductive plate, the upper resin layer, and the upper conductive plate.
15. A method of manufacturing a cap assembly, the method comprising:
   inserting a lower conductive plate, an upper conductive plate, and a gasket into a mold placed on a stage;
   moving the mold to a first injection area;
   forming an upper resin layer by injecting a first resin composition between the lower conductive plate and the upper conductive plate while maintaining the mold at a first temperature;
   moving the mold to a second injection area;
   forming a lower resin layer by injecting a second resin composition below the lower conductive plate while maintaining the mold at a second temperature; and
   obtaining the lower conductive plate, the upper conductive plate, the lower resin layer, and the upper resin layer fused together by disassembling the mold.
16. The method of embodiment 15, wherein the injecting of the first resin composition comprises injecting a molten polyphenylene sulfide (PPS) from above the mold by pin gate injection.
17. The method of embodiment 15, wherein the injecting of the first resin composition comprises injecting a molten material selected from an epoxy resin, an acrylic resin, and a silicone resin from above the mold by pin gate injection.
18. The method of any one of embodiments 15 to 17, wherein the injecting of the second resin composition comprises injecting a molten polypropylene (PP) downwards from a side portion of the mold by tunnel gate injection.
19. The method of any one of embodiments 15 to 18, wherein the first temperature ranges from 120 °C to 140 °C, and the second temperature ranges from 40 °C to 80 °C.
20. The method of any one of embodiments 15 to 19, wherein the moving of the mold to the first injection area and the moving of the mold to the second injection area are each performed by rotation of the stage to which the mold is fixed.
21. The cap assembly of any one of embodiments 1 to 7, wherein the cap assembly is free from rivets.
22. The cap assembly of any one of embodiments 1 to 7, wherein the cap assembly held together by molded components.
23. The cap assembly of any one of embodiments 1 to 7, wherein the cap assembly is free from welded joints.
24. The cap assembly of any one of embodiments 1 to 7, wherein the cap assembly is free from welded joints.
25. A secondary battery comprising the cap assembly of any one of embodiments 1 to 7 and 21 to 24.

Although the present disclosure has been described above with respect to embodiments thereof, the present disclosure is not limited thereto. Various modifications and variations can be made thereto by those skilled in the art within the equivalent scope of the appended claims.

## Claims

1. A cap assembly (90, 90a) comprising:
a lower conductive plate (10);
an upper conductive plate (20) disposed above the lower conductive plate (10);
a lower resin layer (30) fused to a bottom surface of the lower conductive plate (10); and
an upper resin layer (40, 60) fused to a top surface of the lower conductive plate (10), a bottom surface of the upper conductive plate (20), or the top surface of the lower conductive plate (10) and the bottom surface of the upper conductive plate (20).

2. The cap assembly (90) as claimed in claim 1, wherein the upper resin layer (40) is composed of a conductor, and the upper conductive plate (20) is provided as a positive electrode terminal.

3. The cap assembly (90) as claimed in claim 2, wherein the upper resin layer (40) is made of conductive resin.

4. The cap assembly (90a) as claimed in claim 1, wherein the upper resin layer (60) is composed of an electrical insulator made of resin, and the upper conductive plate (20) is provided as a negative electrode terminal.

5. The cap assembly (90a) as claimed in claim 4, wherein the upper resin layer (60) is made of an epoxy resin, an acrylic resin, a silicone resin, or a polyolefin resin.

6. The cap assembly (90, 90a) as claimed in any one of claims 1 to 5, further comprising a gasket (50) configured to cover at least a portion of an inner surface of an electrode hole (EH) that extends through the lower resin layer (30), the lower conductive plate (10), the upper resin layer (40), and the upper conductive plate (20).

7. A secondary battery (500) comprising:
an electrode assembly (EA) comprising a positive electrode plate (A), a negative electrode plate (C), and a separator film (S);
a battery can (100) comprising a receiving space (O) in which the electrode assembly (EA) is received, with at least one end of the battery can (100) being open; and
at least one electrode terminal (200) configured to close the open end of the battery can (100) to seal the receiving space (O), the at least one electrode terminal (200) being electrically connected to the electrode assembly (EA),
wherein the electrode terminal (200) comprises a cap assembly (90, 90a) comprising a pair of conductive plates (10, 20) and a pair of resin layers (30, 40, 60) alternating with the pair of conductive plates (10, 20).

8. The secondary battery (500) as claimed in claim 7, wherein the cap assembly (90) comprises:
a lower conductive plate (10);
an upper conductive plate (20) disposed above the lower conductive plate (10);
a lower resin layer (30) fused to a bottom surface of the lower conductive plate (10); and
an upper resin layer (40) fused to a top surface of the lower conductive plate (10), a bottom surface of the upper conductive plate (20), or the top surface of the lower conductive plate (10) and the bottom surface of the upper conductive plate (20), and the upper resin layer (40) is made of a conductive resin.

9. The secondary battery (500) as claimed in claim 7, wherein the cap assembly (90a) comprises:
a lower conductive plate (10);
an upper conductive plate (20) disposed above the lower conductive plate (10);
a lower resin layer (30) fused to a bottom surface of the lower conductive plate (10); and
an upper resin layer (60) fused to a top surface of the lower conductive plate (10), a bottom surface of the upper conductive plate (20), or the top surface of the lower conductive plate (10) and the bottom surface of the upper conductive plate (20), and the upper resin layer (60) is composed of an electrical insulator made of resin.

10. A method of manufacturing a cap assembly, the method comprising:
inserting a lower conductive plate (10), an upper conductive plate (20), and a gasket (50) into a mold (M) placed on a stage (610) (S100);
moving the mold (M) to a first injection area (P1) (S200);
forming an upper resin layer (40) by injecting a first resin composition between the lower conductive plate (10) and the upper conductive plate (20) while maintaining the mold (M) at a first temperature (S300);
moving the mold (M) to a second injection area (P2) (S400);
forming a lower resin layer (30) by injecting a second resin composition below the lower conductive plate (10) while maintaining the mold (M) at a second temperature (S500); and
obtaining the lower conductive plate (10), the upper conductive plate (20), the lower resin layer (30), and the upper resin layer (40) fused together by disassembling the mold (M) (S600).

11. The method as claimed in claim 10, wherein the injecting of the first resin composition (S300) comprises injecting a molten polyphenylene sulfide from above the mold by pin gate injection.

12. The method as claimed in claim 10, wherein the injecting of the first resin composition (S300) comprises injecting a molten material selected from an epoxy resin, an acrylic resin, and a silicone resin from above the mold (M) by pin gate injection.

13. The method as claimed in any one of claims 10 to 12, wherein the injecting of the second resin composition (S500) comprises injecting a molten polypropylene downwards from a side portion of the mold (M) by tunnel gate injection.

14. The method as claimed in any one of claims 10 to 13, wherein the first temperature ranges from 120 °C to 140 °C, and the second temperature ranges from 40 °C to 80 °C.

15. The method as claimed in any one of claims 10 to 14, wherein the moving of the mold (M) to the first injection area (P1) (S200) and the moving of the mold (M) to the second injection area (P2) (S400) are each performed by rotation of the stage (610) to which the mold (M) is fixed.
